# NEUE EUROPÄISCHE PATENTSCHRIFT

(11) **EP 0 867 399 B2**
(45) Veröffentlichungstag und Bekanntmachung des Hinweises auf die Entscheidung über den Einspruch: **16.11.2005**
(45) Hinweis auf die Patenterteilung: 31.10.2001
(21) Anmeldenummer: 98104534.7
(22) Anmeldetag: 13.03.1998
(51) Int. Cl.: B66C 23/00, B60P 1/48

(54) **Absetzkipper**
Removable bucket
Benne basculante

(30) Priorität: 26.03.1997 DE 29705470 U
(43) Veröffentlichungstag der Anmeldung: 30.09.1998
(73) Patentinhaber: Gergen, Hans Georg, D-66386 St Ingbert (DE); Gergen, Engelbert, D-66583 Spiesen-Elversberg (DE); Gergen, Ottmar, D-66386 St Ingbert (DE)
(72) Erfinder: Gergen, Hans Georg, D-66386 St Ingbert (DE); Gergen, Engelbert, D-66583 Spiesen-Elversberg (DE); Gergen, Ottmar, D-66386 St Ingbert (DE)
(74) Vertreter: Vièl, Christof

(56) Entgegenhaltungen:
- EP-A- 0 563 913
- CH-A- 546 657
- DE-A- 1 300 038
- DE-A- 2 608 342
- DE-A- 3 329 412
- DE-A- 3 602 694
- DE-A- 3 702 420
- DE-A- 3 710 094
- DE-C- 2 433 871
- GB-A- 1 002 635
- GB-A- 2 128 168
- PATENT ABSTRACTS OF JAPAN vol. 009, no. 139 (M-387), 14.Juni 1985 & JP 60 018430 A (KONGOU SEISAKUSHO:KK), 30.Januar 1985,

## Beschreibung

Die Erfindung betrifft einen Absetzkipper, der zwei im wesentlichen parallel zueinander angeordnete, im hinteren Bereich der Fahrzeug-Ladefläche angelenkte, um zum hinteren Rand der Ladefläche etwa parallel laufende Achsen schwenkbare Arme aufweist, an deren freien Enden Angriffsorgane angeordnet sind, mit denen Angriffspunkte eines Wechselbehälters erfaßbar sind, wobei zum Verschwenken der Arme jeweils ein am Fahrgestell angelenkter Hydraulikzylinder vorgesehen ist. Ein derartiger Absetzkipper ist bereits aus der GB-A-2 128 168 bekannt.

Derartige Absetzkipper werden zum Transport von Wechselbehältern, wie Silos, Kippmulden etc. eingesetzt.

Bei diesen Absetzkippern sind die Arme in der Regel gerade ausgebildet, wobei der Angriffspunkt des Hydraulikzylinders als in etwa dreieckiger Ansatz an der Oberseite des eigentlichen Arms ausgebildet ist.

Diese Ausführung ist insofern von Nachteil, als beim Absetzen bzw. Aufnehmen von Wechselbehältern ein Überfahren des Wechselbehälters mit den nach hinten von der Ladefläche weg gerichteten Armen problematisch ist, da die Arme bereits bei einem relativ geringen Winkel auf der Kante des Wechselbehälters aufliegen. Gerade bei modernen Absetzkippern mit einzeln verschwenkbaren Teleskoparmen vermindert diese Tatsache die eigentlich großen Schwenkmöglichkeiten erheblich.

Aufgabe der Erfindung ist es somit, einen Absetzkipper, der zwei im wesentlichen parallel zueinander angeordnete, im hinteren Bereich der Fahrzeug-Ladefläche angelenkte, um zum hinteren Rand der Ladefläche etwa parallel laufende Achsen schwenkbare Arme aufweist, an deren freien Enden Angriffsorgane angeordnet sind, mit denen Angriffspunkte eines Wechselbehälters erfaßbar sind, wobei zum Verschwenken der Arme jeweils ein am Fahrgestell angelenkter Hydraulikzylinder vorgesehen ist zu schaffen, bei dem eine bessere Schwenkmöglichkeit der nach hinten von der Ladefläche weg über einen Wechselbehälter angeordneten Armen gegeben ist.

Hinzu kommt, daß es bei herkömmlichen Absetzkippern aufgrund der beschränkten Länge der Lastaufnahmemittel (z.B. Ketten) erforderlich ist, die rückwärts von der Ladefläche weg gerichteten Arme des Absetzkippers parallel zur Längsachse des Wechselbehälters anzuordnen, um die Lastaufnahmemittel an dem Wechselbehälter zu befestigen. Dies erfordert einen erheblichen Rangieraufwand.

Diese Aufgabe wird erfindungsgemäß dadurch gelöst, daß die Arme in dem Bereich zwischen dem Anlenkungspunkt im hinteren Bereich der Ladefläche und dem Angriffspunkt des Hydraulikzylinders eine erste Abwinkelung nach oben aufweisen und daß oberhalb der ersten Abwinkelung eine zweite Abwinkelung der Arme vorgesehen ist, so daß die Längsachsen des unteren Endes und des oberen Endes jedes Armes in etwa parallel zueinander angeordnet sind.

Eine Ausbildung der Erfindung sieht vor, daß der Angriffspunkt des Hydraulikzylinders als in etwa dreieckiger Ansatz an der Oberseite des eigentlichen Arms ausgebildet ist.

Es liegt auch im Rahmen der Erfindung, daß die Arme des Absetzkippers synchron oder einzeln längenveränderbar und/oder schwenkbar sind.

Weiterhin ist es vorteilhaft, daß das längenveränderbare Ende jedes Armes nach unten abgewinkelt ist.

Schließlich ist es zweckmäßig, daß vorzugsweise im hinteren Bereich der Ladefläche Stützvorrichtungen vorgesehen sind.

Die Erfindung hat im wesentlichen den Vorteil, daß ein Übergreifen eines Wechselbehälters mit einem oder mehreren nach hinten geschwenkten Armen leichter möglich ist. Durch die Abwinkelung der Arme nach oben, die vorteilhaft mit der Abwinkelung nach unten des teleskopierbaren Endes kombiniert werden kann, wird in einem weiten Bereich der Arme, wenn diese nach hinten von der Ladefläche weggeschwenkten sind, ein Zustand erreicht, der einer Ausnehmung in den Armen entspricht, jedoch ohne die nachteilige Verminderung der Belastbarkeit der Arme.

Beim Gegenstand der vorliegenden Erfindung ist es nicht mehr erforderlich, die nach hinten von der Ladefläche des Absetzkippers gerichteten Arme parallel zur Längsachse des Wechselbehälters auszurichten, sondern eine Aufnahme von Wechselbehältern ist auch bei einer schrägen Anordnung der Arme zu dem Wechselbehälter möglich.

Im folgenden wird eine beispielhafte Ausführung der Erfindung anhand von Zeichnungen erläutert. Es zeigen
- Fig. 1: einen erfindungsgemäßen Arm eines Absetzkippers,
- Fig. 2: einen geraden Arm gemäß dem Stand der Technik,
- Fig. 3: einen mit einem erfindungsgemäßen Arm ausgerüsteten Absetzkipper beim Übergreifen eines Wechselbehälters.

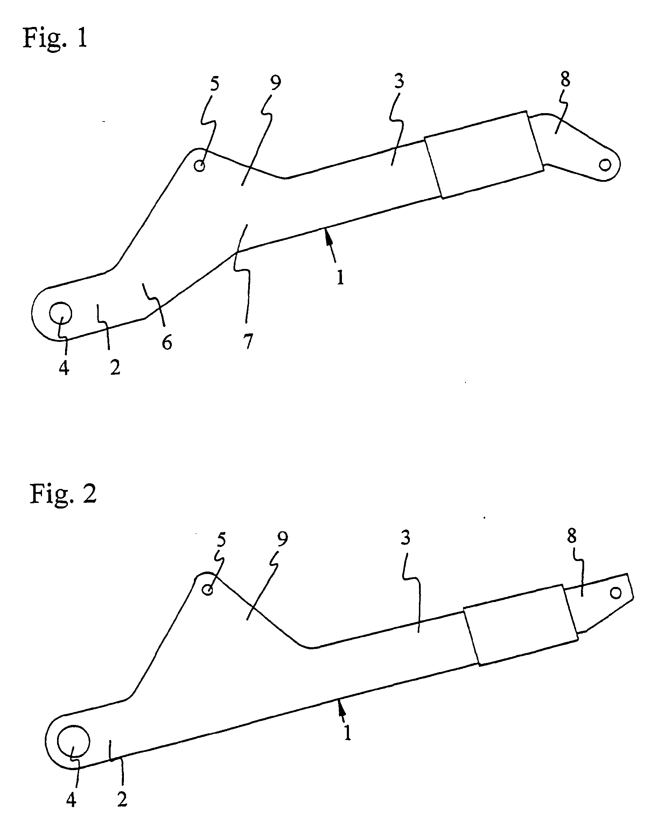

Der aus Fig. 1 ersichtliche Arm 1 eines Absetzkippers weist ein unteres Ende 2 mit einem Anlenkungspunkt 4 auf, mit dem er schwenkbar im Bereich des hinteren Endes einer Ladefläche angelenkt werden kann. Im vorliegenden Beispiel erfolgt die Anlenkung über einen Bolzen, der durch den als Bohrung im unteren Ende 2 des Arms 1 ausgebildeten Anlenkungspunkt 4 gesteckt und gesichert wird.

Zur Betätigung des Armes 1 ist im weiteren Verlauf des Armes 1 ein Angriffspunkt 5 für einen mit dem Chassis des Absetzkippers verbundenen Hydraulikzylinder vorgesehen, der vorzugsweise an einem in etwa dreieckigen Ansatz 9 an der Oberseite des eigentlichen Arms lausgebildet ist.

Weiterhin weist der Arm in dem Bereich zwischen dem Anlenkungspunkt 4 und dem Angriffspunkt 5 des Hydraulikzylinders eine erste Abwinkelung 6 nach oben auf und es ist oberhalb der ersten Abwinkelung 6 eine zweite Abwinkelung 7 des Armes vorgesehen, so daß die Längsachsen des unteren Endes 2 und des oberen Endes 3 jedes Armes 1 in etwa parallel zueinander angeordnet sind.

Der vordere Bereich 8 des oberen Endes 3 des Arms 1 ist vorzugsweise längenveränderbar bzw. teleskopierbar und, wie in Fig. 1 dargestellt, nach unten abgewinkelt. Hierdurch wird erreicht, daß die am vorderen Bereich angeordneten Lastaufnahmemittel (nicht dargestellt), bei denen es sich beispielsweise um Klauen, Ketten, Haken, Seile etc. handeln kann, im selben Punkt liegen, wie dies bei einem geraden Arm gemäß dem Stand der Technik (Fig. 2) der Fall ist.

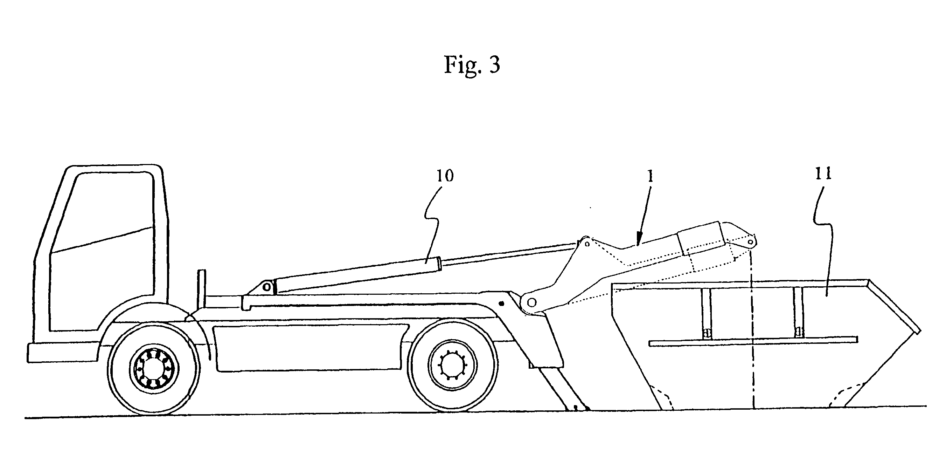

In Fig. 3 ist ein Absetzkipper dargestellt, der in dem Bereich des hinteren Endes der Ladefläche zwei erfindungsgemäße Arme 1 aufweist, welche an den Anlenkungspunkten 4 an dem Absetzkipper schwenkbar angelenkt sind und über Hydraulikzylinder 10, die am Absetzkipper angelenkt sind und an dem Angriffspunkt 5 des Armes 1 angreifen, betätigbar sind. Ein Wechselbehälter 11 soll mit diesen Armen 1 aufgenommen werden, wobei die lichte Höhe des erfindungsgemäßen nach hinten von der Ladefläche weggeschwenkten Armes (durchgezogene Linien) ersichtlich größer ist als die eines bekannten geraden Armes gemäß Fig. 2 (gestrichelte Linie).

## Patentansprüche

1. Absetzkipper, der zwei im wesentlichen parallel zueinander angeordnete, im hinteren Bereich der Fahrzeug-Ladefläche angelenkte, um zum hinteren Rand der Ladefläche etwa parallel laufende Achsen schwenkbare und Arme aufweist, an deren freien, *längenveränderbaren* Enden Angriffsorgane angeordnet sind, mit denen Angriffspunkte eines Wechselbehälters erfaßbar sind, wobei zum Verschwenken der Arme jeweils ein am Fahrgestell angelenkter Hydraulikzylinder vorgesehen ist, **dadurch gekennzeichnet, daß** die Arme (1) in dem Bereich zwischen dem Anlenkungspunkt (4) im hinteren Bereich der Ladefläche und dem Angriffspunkt (5) des Hydraulikzylinders (10) eine erste Abwinkelung (6) nach oben aufweisen und daß oberhalb der ersten Abwinkelung (6) eine zweite Abwinkelung (7) der Arme (1) vorgesehen ist, so daß die Längsachsen des unteren Endes (2) und das oberen Endes (3) jedes Armes (1) in etwa parallel zueinander angeordnet sind.

2. Absetzkipper gemäß Anspruch 1, **dadurch gekennzeichnet, daß** der Angriffspunkt (5) des Hydraulikzylinders (10) als in etwa dreieckiger Ansatz (9) an der Oberseite des eigentlichen Arms (1) ausgebildet ist.

3. Absetzkipper gemäß Anspruch 1, **dadurch gekennzeichnet, daß** die Arme (1) des Absetzkippers synchron oder einzeln längenveränderbar und/oder schwenkbar sind.

4. Absetzkipper gemäß Anspruch 1, **dadurch gekennzeichnet, daß** das längenveränderbare Ende (8) jedes Armes (1) nach unten abgewinkelt ist.

5. Absetzkipper gemäß Anspruch 1, **dadurch gekennzeichnet, daß** vorzugsweise im hinteren Bereich der Ladefläche Stützvorrichtungen vorgesehen sind.

## Claims

1. Tipping container vehicle with two essentially parallel arms (1) hinged in the rear section of the vehicle's load floor and pivotable about axes (4) running approximately parallel to the rear edge of the load floor, the arms (1) having a their free extendible ends gripping members for gripping a swap container at its attachment points, each arm (1) being connected for the purpose of pivoting with a hydraulic cylinder (10) hinged to the chassis, **characterised in that** in the area between the hinging point (4) in the rear section of the load floor and the attachment point (5) for the hydraulic cylinder (10), the arms (1) have a first upward bend (6), and that above the first bend (6), the arms (1) are provided with a second bend (7) such that the longitudinal axes of the lower end (2) and the upper end (3) of each arm (1) are approximately parallel.

2. The tipping container vehicle of claim 1, **characterised in that** the attachment point (5) for the hydraulic cylinder (10) is formed in an approximately triangular projection (09) on the upper side of the actual arm (1)

3. The tipping container vehicle of claim 1, **characterised in that** the arms (1) of the tipping container vehicle can be extended and/or privoted synchronously or individually.

4. The tipping container vehicle of claim 1, **characterised in that** the extensible end (8) of each arm (1) is angled downwards.

5. The tipping container vehicle of claim 1, **characterised in that** support devices are provided, preferably in the rear section of the load floor.

## Revendications

1. Benne basculante munie de deux bras (1) essentiellement parallèles l'un à l'autre, articulés sur la partie arrière de la plate-forme de chargement du véhicule, pouvant pivoter autour d'axes (4) s'étendant pratiquement parallèlement au bord arrière de la plate-forme de chargement, à l'extrémité libre et extensible desquels sont disposés des organes de préhension avec lesquels peuvent être saisis des points de saisie d'un conteneur interchangeable, un cylindre hydraulique (10) articulé au châssis étant prévu pour le pivotement de chaque bras (1), **caractérisée en ce que** les bras (1) présentent un premier coude (6) vers le haut dans le domaine situé entre le point d'articulation (4) dans le domaine arrière de la plate-forme de chargement et le point de saisie (5) du cylindre hydraulique (10), et **en ce qu'**il est prévu un deuxième coude (7) dans le bras (1) au-dessus de premier coude (6), de sorte que les axes longitudinaux de l'extrémité inférieure (2) et l'extrémité supérieure (3) de chaque bras (1) sont disposés pratiquement parallèlement l'un à l'autre.

2. Benne basculante selon la revendication 1, **caractérisée en ce que** le point de saisie (5) du cylindre hydraulique (10) a la forme d'un épaulement (9) essentiellement triangulaire situé sur la surface supérieure du bras proprement dit (1).

3. Benne basculante selon la revendication 1, **caractérisée en ce que** les bras (1) de la benne basculante peut être modifiés en longueur et / ou basculés de façon synchrone ou séparément.

4. Benne basculante selon la revendication 1, **caractérisée en ce que** l'extrémité (8) de chaque bras (1) dont la longueur peut être modifiée est recourbée vers le bas.

5. Benne basculante selon la revendication 1, **caractérisée en ce que** des dispositifs d'appui sont prévus de préférence dans le domaine arrière de la plate-forme de chargement.
